# EUROPEAN PATENT SPECIFICATION

(11) **EP 2 338 661 B1**
(45) Date of publication and mention of the grant of the patent: **14.09.2016**
(21) Application number: 10195492.3
(22) Date of filing: 16.12.2010
(51) Int. Cl.: B29C 47/50, B29D 30/62, B29C 47/06, B29C 47/10

(54) **Method for forming a rubber article**
Verfahren zum Formen eines Kautschukartikels
Procédé de formation d'un article en caoutchouc

(30) Priority: 23.12.2009 US 289705 P; 19.11.2010 US 950327
(43) Date of publication of application: 29.06.2011
(73) Proprietor: The Goodyear Tire & Rubber Company, Akron, OH 44316-0001 (US)
(72) Inventor: D'Sidocky, Richard Michael, Ravenna, OH 44266 (US); Dando, Rebecca Lee, Uniontown, OH 44685 (US); Burg, Gary Robert, Massillon, OH 44646 (US); Stuber, Neil Phillip, Munroe Falls, OH 44262 (US); Pulford, Carl Trevor Ross, Akron, OH 44333 (US)
(74) Representative: Kutsch, Bernd

(56) References cited:
- EP-A1- 0 485 127
- EP-A1- 1 454 732
- EP-A1- 2 039 492
- EP-A2- 0 970 797
- EP-A2- 2 177 342
- WO-A1-2004/007172
- DE-A1-102005 050 619
- JP-A- 2004 216 725
- JP-A- 2004 216 826

## Description

### Field of the Invention

The invention relates in general to the manufacturing of rubber laminates or rubber articles as used in tire manufacturing, and more particularly to continuous production of custom rubber mixtures.

### Background of the Invention

Tire manufacturers have progressed to more complicated designs due to an advance in technology as well as a highly competitive industrial environment. In particular, tire designers seek to use multiple rubber compounds in a tire in order to meet customer demands. Using multiple rubber compounds per tire can result in a huge number of compounds needed to be on hand for the various tire lines of the manufacturer. For cost and efficiency reasons, tire manufacturers seek to limit the number of compounds available due to the extensive costs associated with each compound. Each compound typically requires the use of a Banbury mixer, which involves expensive capital expenditures. Furthermore, Banbury mixers have difficulty mixing up tough or stiff rubber compounds. The compounds generated from the Banbury mixers are typically shipped to the tire building plants, thus requiring additional costs for transportation. The shelf life of the compounds is not finite, and if not used within a certain time period, is scrapped.

Thus an improved method and apparatus is desired which substantially reduces the need for the use of Banbury mixers while providing an apparatus and methodology to provide custom mixing at the tire building machine by blending of two or more compounds together, and controlling the ratio of the compounds and other additives. Both non-productive compounds and productive compounds could be blended together. It is further desired to have a system at the tire building machine which provides for the ability to manufacture customizable compounds with accelerators. Yet an additional problem to be solved is to generate the compounds continuously at the tire building machine.

JP-A- 2004-216725 describes a method of forming a rubber article comprising two or more layers wherein a first rubber compound is extruded through a first extruder and a first gear pump and a rubber compound is extruded through a second extruder and a second gear pump. The ratio of the first compound to the second compound may be adjusted and the compounds may be extruded onto a substrate to form a first layer and a second layer with a different planed ratio.

EP-A- 2 039 492 describes an apparatus for manufacturing a rubber article comprising a main extruder in fluid communication with a first gear pump for processing a first compound and a second extruder in fluid communication with a second gear pump for processing a second compound wherein the output from the second gear pump is fat into the main extruder. An nozzle shaping die may be used for applying compound onto a substrate.

A further extrusion apparatus is described in DE-A- 10 2005 050 619 and EP-A-0 970 797.

EP-A-2 177 342, which has been published only after the priority date of this application, shows an extruder apparatus having a main extruder followed by a gear pump into a which a plurality of side extruders, each followed by a respective gear pump, pumps components of the compound mixed in the main extruder into the main extruder.

### Summary of the Invention

The invention relates to a method of forming a rubber article, particularly a rubber laminate, in accordance with claim 1.

Dependent claims refer to preferred embodiments of the invention.

### Definitions

"Productive compound" means a rubber compound that includes accelerators, sulfur and other materials needed to cure the rubber.

"Non-productive compound" means a rubber compound that does not have one or more of the following items: 1) accelerator; 2) sulfur; or 3) curing agent(s).

### Brief Description of the Drawings

The invention will be described by way of example and with reference to the accompanying drawings in which:
FIG. 1 is a schematic of a mixing system of the present invention;
FIG. 2 is a schematic showing exemplary output from the mixing system;
FIG. 3 illustrates a cross-sectional profile of a tread of the present invention;
FIG. 4 illustrates a chart of Grosch abrasion Cal. Rate vs. Tan delta at 10% strain (100 deg C, 1 Hz) for output generated from the mixing system;
FIG. 5 is a schematic illustrating a tread profile broken down into grid points; and
FIG. 6 illustrates a continuously stratified tread of the present invention.

### Detailed Description of the Invention

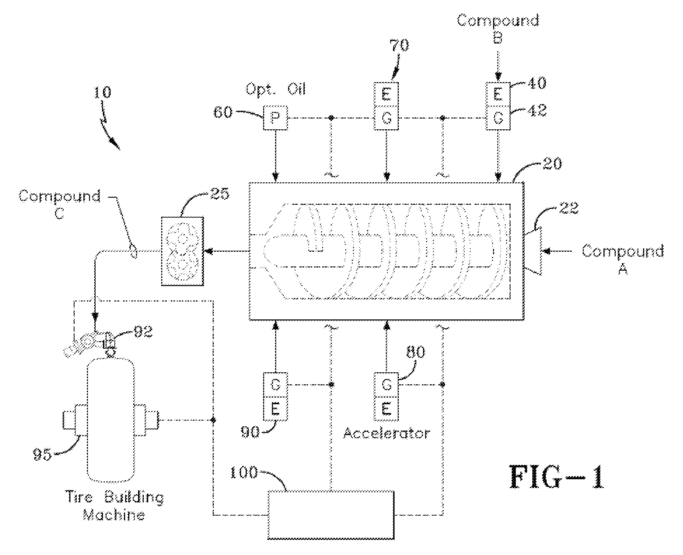

Figure 1 illustrates a first embodiment of a method and apparatus 10 for a continuous mixing system suitable for use for making rubber compositions for tires or tire components. The continuous mixing system is not limited to tire applications and may be used for example, to make other rubber components not related to tires such as conveyors, hoses or belts. The mixing system may be provided directly at the tire building machinery for direct application of the rubber composition to a tire building drum, or to another tire building apparatus. Figure 1 illustrates a continuous mixing apparatus 10 which includes a first or main extruder 20. The extruder 20 has an inlet 22 for receiving a first compound A, which may be a productive or non-productive rubber composition. The extruder may comprise any commercial extruder suitable for processing of rubber or elastomer compounds. The extruder may comprise a commercially available extruder commonly known by those skilled in the art as a pin type extruder, a twin screw or a single screw extruder, or a ring type of extruder. One commercially available extruder suitable for use is a multicut transfermix (MCT) extruder, sold by VMI Holland BV, The Netherlands. Preferably, the extruder has an L/D of 8, but it may also range from 5 to 25, preferably 10-15. A ring type, pin type or MCT type of extruder is preferred, but is not limited to same. The extruder functions to warm up the compound A to the temperature in the range of 80°C to 150 °C, preferably 90 °C to 120 °C, and to masticate the rubber composition as needed.

A second compound, referred to as "compound B" enters the extruder 20 and is mixed with compound A. Compound B may also comprise a productive or non-productive rubber composition. Examples of compound B compositions are described in more detail, below. Compound B is first extruded by a second extruder 40 and a second gear pump 42 prior to entering the first a main extruder 20. Compound B is output from the gear pump 42 into the main extruder 20 in a controlled amount. The second extruder 40 may be a conventional pin type, ring type, dual screw or single screw type extruder. The gear pump 42 functions as a metering device and a pump and may have gears such as planetary gears, bevel gears or other gears. The extruder 40 and gear pump 42 may also be a combination unit. Preferably, compound B enters the main extruder between the entrance 22 and 1/3 the length of the extruder as measured from the entrance.

The main extruder blends compound A and compound B together in a precisely controlled amount. Oil may be optionally injected into the main extruder
22 via an oil pump 60 at any desired location. The oil controls the viscosity of the compound mixture.

The apparatus 10 may further include a first additive pumping device 70 for pumping one or more additives such as a primary accelerator, which may be optionally added to the mixture at the main extruder 22 or a gear pump 25. The apparatus may further include a second additive pumping device 80 for pumping one or more additives such as a secondary accelerator into the main extruder 22 or the gear pump 25. The apparatus may further include a third additive pumping device 90 for pumping one or more additives such as a third accelerator into the main extruder 22 or the gear pump 25. The additive pumps 70, 80, 90 may be a gear pump, a combination gear pump and extruder, a venturi pump or other pumping means known to those skilled in the art.

If more than one accelerator is used, they may be added into the mixture separately or together. For example, a primary accelerator and a secondary accelerator may both be added. Accelerators are used to control the time and/or temperature required for vulcanization and to improve the properties of the rubber. The accelerator may be in powder form or an encapsulated powder into a resin or rubber base. Examples of accelerator compositions are described in more detail, below.

Other additives include a curative agent or precursor, which may also be added to the extruder 20 via additive pump 90. One example of a curative agent is sulfur. The sulfur may be added in solid form.

The main extruder 22 outputs a rubber mixture which may be a precise mixture of the A and B compound, optional oil and optional accelerants and optional additives, and is referred to as compound C. The output mixture of compound C exits the main extruder 22 and enters a gear pump 25. The gear pump 25 is preferably located adjacent a tire building station 95 for direct application onto a core, tire blank buffed carcass for a retreaded tire or tire building drum, as shown in Figure 1. Gear pump 25 may preferably comprise a nozzle or shaping die 92 which applies the compound formulation output from the gear pump 25 directly onto the tire building machine 95 in preferably continuous strips which are wound onto a tire building drum or core.

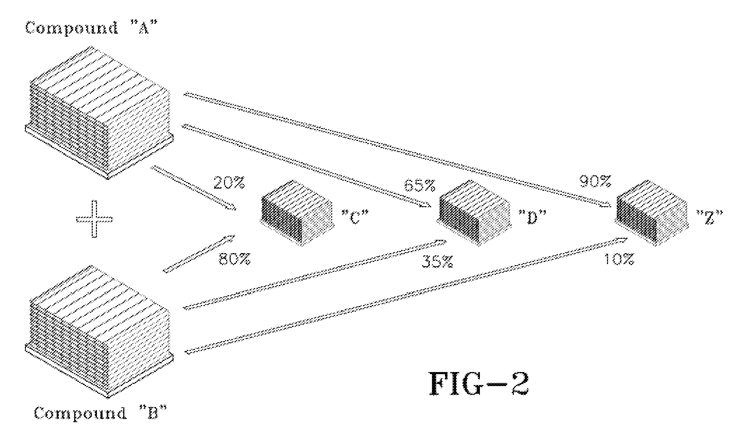

The ratio of the volumetric flow rate of compound A to the volumetric flow rate of compound B is precisely controlled for instance by the ratio of the speed of the gear pump 25 for compound A and the speed of gear pump 42 for compound B. For example, the compound output from the system 10 may comprise a ratio of 20% of compound A and 80% of compound B by volume, as shown in Figure 2. Alternatively, the compound output from the system may comprise a mixture D having a ratio of 35% of compound B and 65% of compound A by volume. Alternatively, the compound output from the system may comprise a mixture Z having a ratio of 10% of compound B and 90% of compound A by volume. The ratio of compound A to compound B can thus range from 0:100% to 100%:0. The ratio may be adjusted about instantaneously by varying the speeds of gear pumps 25 and 42 by a computer controller 100. The computer controller 100 may additionally controls the extruder and gear pump operating parameters such as operating pressure, operating temperature, pump or screw speed.

Preferably, the computer controller 100 sets a pressure target value for the exit pressure of each extruder. The extruder speed is controlled by the controller, and is varied until the pressure target is met. The pressure target value affects the quality of mixing by causing backflow of the material in the extruder.

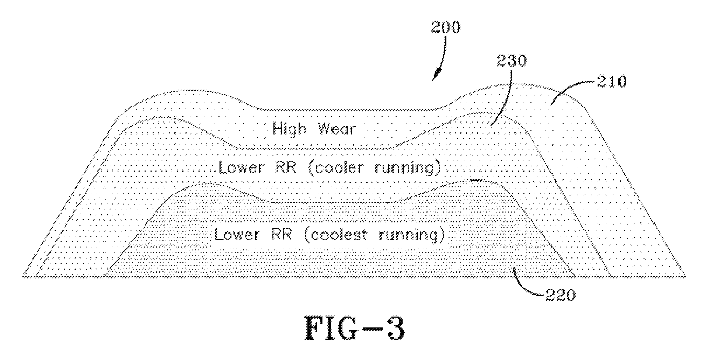

In one example of the invention, a stratified tread 200 is formed having a cross-sectional profile as shown in Figure 3. The stratified tread comprises three or more layers. The radially outermost layer 210 is preferably formed of a tread compound (such as compound A) that has high wear resistance. High wear resistant tread compounds tend to be stiff compounds, with high filler content. The radially innermost layer 220 is preferably formed of a compound having low or ultra low rolling resistance (such as compound B). Compounds that have low rolling resistance are generally soft compounds with low filler content. Low rolling resistance compounds tend to have a high wear rate. The middle layer or intermediate layer 230 is preferably formed of a blend of the compound selected for the radially outermost layer 210 (such as compound A) and the radially innermost layer 220 (such as compound B). In a preferred embodiment, layer 210 has an at least 10%, preferably 10% to 50% higher rolling resistance than layer 220, and layer 220 has an at least 10%, preferably 10% to 50% lower wear resistance than layer 210.

In order to form the tread, a first layer of compound A (or of mainly compound A) is extruded onto a form or tire building machine. The tread may be extruded in strips onto the tire building machine. The mixing system of Figure 1 may be utilized, with the desired compound A selected being fed into the extruder 20. The compound A exits the gear pump 25 and is fed onto tire building drum 95 via nozzle 92. The compound A is extruded onto the tire drum in the desired profile.

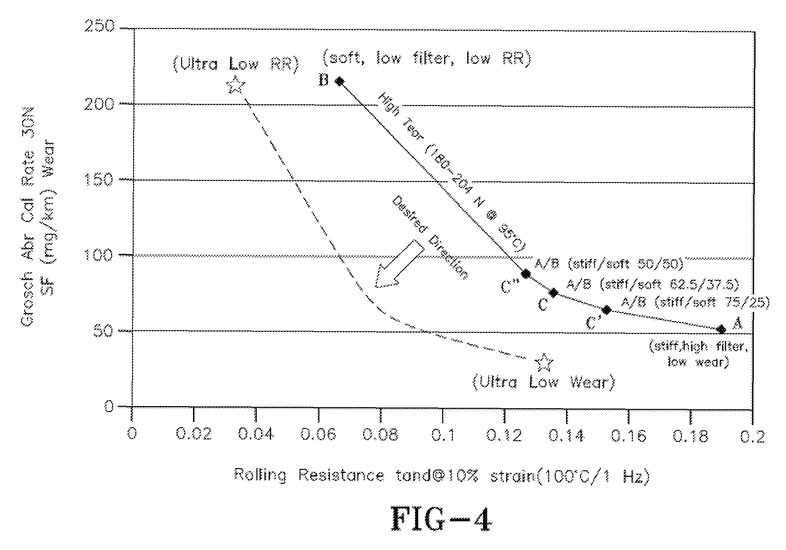

In order to form the middle layer 230, compound A is blended with compound B. Compound B is preferably selected to have low rolling resistance properties. The desired properties of the middle layer dictate the blend ratio of the compounds. For example, as shown in Fig. 4, a 50-50 ratio of compound A to compound B produces a low rolling resistance compound with low wear resistance (point C). Adjusting the ratio to 75-25 of compound A to compound B produces a slightly higher rolling resistance compound as compared to C with lowest wear resistance (C"). After the desired blend ratio is selected, the compound A is blended with compound B using a ratio of the gears to get the precise blending. The blend is then extruded onto the tire building drum in the desired profile.

Next, the outer layer if formed by extruding compound B (or mainly compound B) onto the tire building drum over the middle layer in the desired profile. The outer layer may also be a blend of compound A with compound B to arrive at the desired properties.

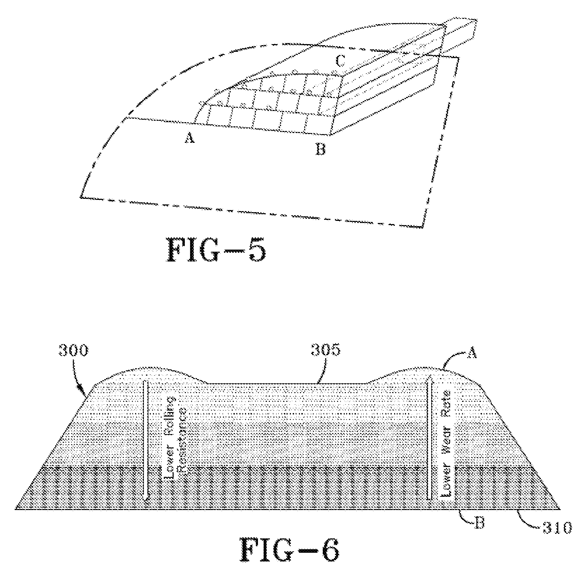

Figure 6 illustrates a second embodiment of a stratified tread profile 300. The radially outer surface 305 is formed of 100% of compound A. In this example, compound A is selected to have high wear resistance. High wear resistant tread compounds tend to be stiff compounds, with high fillers. The radially innermost layer 310 is formed of compound B. Compound B is selected to have low rolling resistance properties, although other compound properties may be selected.

To form the tread, the mixing system of Figure 1 may be utilized, with the desired compound A being fed into the extruder 20. The compound A exits the gear pump 25 and is fed onto tire building drum 95 via nozzle 92. The compound A is extruded onto the tire drum in a first layer. A second layer is then extruded over the first layer. The second layer is a blend of compound A and compound B. In one example, the second layer may be formed of 10% compound A with 90% compound B. The mixing system of Figure 1 is adjusted via speed of gear pumps 25 and 42 so that the output mixture comprises 10% compound A with 90% compound B. A third layer is then extruded over the first layer. The third layer may comprise 20% compound A with 80% compound B. A fourth layer may then be extruded over the third layer, and having a 30-70 ratio. The process may be repeated until the outer layer is formed from 100% compound A.

The tread may also be formed by varying the composition or blend ratio of the rubber mixture in the axial direction. The tread may also be formed by varying the composition or blend ratio of the rubber mixture in both the axial and radial direction as desired. Figure 5 illustrates a portion of the tread profile broken into small increments. Once the ideal tread profile has been designed, the tread profile is broken down into small incremental blocks A, B, C, and the desired blend ratio is selected for each incremental block. Utilizing the computer control, one or more strips having the desired blend ratio may be applied to the tire building drum. The blend ratio may vary in the radial direction, the axial direction, or both directions as desired.

The following are compositions which may be used in conjunction with the invention.

### I. Accelerator Compositions

In one embodiment, a single accelerator system may be used, i.e., primary accelerator. The primary accelerator(s) may be used in total amounts ranging from 0.5 to 4, alternatively 0.8 to 1.5, phr. In another embodiment, combinations of a primary and a secondary accelerator might be used with the secondary accelerator being used in smaller amounts, such as from 0.05 to 3 phr, in order to activate and to improve the properties of the vulcanized rubber. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be a guanidine, dithiocarbamate or thiuram compound. Suitable guanidines include dipheynylguanidine and the like. Suitable thiurams include tetramethylthiuram disulfide, tetraethylthiuram disulfide, and tetrabenzylthiuram disulfide.

### II. Rubber Compositions

Representative rubbers that may be used in the rubber compound include acrylonitrile/diene copolymers, natural rubber, halogenated butyl rubber, butyl rubber, cis-1,4-polyisoprene, styrene-butadiene copolymers, cis-1,4-polybutadiene, styrene-isoprene-butadiene terpolymers ethylene-propylene terpolymers, also known as ethylene/propylene/diene monomer (EPDM), and in particular ethylene/propylene/dicyclopentadiene terpolymers. Mixtures of the above rubbers may be used. Each rubber layer may be comprised of the same rubber composition or alternating layers may be of different rubber composition.

The rubber compound may contain a platy filler. Representative examples of platy fillers include talc, clay, mica and mixture thereof. When used, the amount of platy filler ranges from 25 to 150 parts per 100 parts by weight of rubber (hereinafter referred to as phr). Preferably, the level of platy filler in the rubber compound ranges from 30 to 75 phr.

The various rubber compositions may be compounded with conventional rubber compounding ingredients. Conventional ingredients commonly used include carbon black, silica, coupling agents, tackifier resins, processing aids, antioxidants, antiozonants, stearic acid, activators, waxes, oils, sulfur vulcanizing agents and peptizing agents. As known to those skilled in the art, depending on the desired degree of abrasion resistance, and other properties, certain additives mentioned above are commonly used in conventional amounts. Typical additions of carbon black comprise from 10 to 150 parts by weight of rubber, preferably 50 to 100 phr. Typical amounts of silica range from 10 to 250 parts by weight, preferably 30 to 80 parts by weight and blends of silica and carbon black are also included. Typical amounts of tackifier resins comprise from 2 to 10 phr. Typical amounts of processing aids comprise 1 to 5 phr. Typical amounts of antioxidants comprise 1 to 10 phr. Typical amounts of antiozonants comprise 1 to 10 phr. Typical amounts of stearic acid comprise 0.50 to 3 phr. Typical amounts of accelerators comprise 1 to 5 phr. Typical amounts of waxes comprise 1 to 5 phr. Typical amounts of oils comprise 2 to 30 phr. Sulfur vulcanizing agents, such as elemental sulfur, amine disulfides, polymeric polysulfides, sulfur olefin adducts, and mixtures thereof, are used in an amount ranging from 0.2 to 8 phr. Typical amounts of peptizers comprise from 0.1 to 1 phr.

### IV. Oil

The rubber composition may also include up to 70 phr of processing oil. Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. Suitable process oils include various oils as are known in the art, including aromatic, paraffinic, naphthenic, vegetable oils, and low PCA oils, such as MES, TDAE, SRAE and heavy naphthenic oils. Suitable low PCA oils include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom.

## Claims

1. A method of forming a rubber article such as a rubber laminate (200, 300) the article comprising two or more layers (220, 230) of rubber, the method comprising the steps of:
extruding a first rubber compound (A) through a first extruder (20) and a first gear pump (25);
extruding a second rubber compound (B) through a second extruder (40) and a second gear pump (42) into the first extruder (20);
adjusting the ratio of the first compound (A) to the second compound (B) by adjusting the speed of the first gear pump (25) and/or the speed of the second gear pump (42), and applying a strip of rubber formed using the first compound (A) and the second compound (B) directly onto a tire building machine or a tire building drum to form a first layer (220) of rubber having a first blend ratio; and
adjusting the ratio of the first compound (A) to the second compound (B) by adjusting the speed of the first gear pump (25) and/or the second gear pump (42) and applying a strip of rubber formed using the first compound (A) and the second compound (B) as a second layer (230) of rubber having a second blend ratio, the first blend ratio and the second blend ratio being different.

2. The method of claim 1 wherein the second layer (230) is applied on top of or over the first layer (220).

3. The method of claim 1 or 2 further comprising:
adjusting the ratio of the first compound (A) to the second compound (B) by adjusting the speed of the first gear pump (25) and/or the second gear pump (42) and applying a strip of rubber formed using the first compound (A) and the second compound (B) as a third layer (210) of rubber having a third blend ratio, the third blend ratio being different from the first blend ratio or the second blend ratio or being different from the first and second blend ratio.

4. The method of claim 3 wherein the third layer (210) is applied on top of or over the second layer (230).

5. The method of at least one of the previous claims wherein the strip of rubber is a continuous strip of rubber.

6. The method of at least one of the previous claims wherein the strip or continuous strip of rubber is applied to the tire building machine or the tire building drum using the first gear pump (25) in combination with a nozzle (92).

7. The method of at least one of the previous claims wherein the first compound (A) has a low rolling resistance property in particular compared to the second compound (B).

8. The method of at least one of the previous claims wherein the second compound (B) has a high wear resistance property in particular compared to the first compound (A).

9. The method of at least one of the previous claims wherein the rubber article (200, 300) is a tread for a pneumatic tire.

10. The method of at least one of the previous claims wherein the rubber article (200, 300) is a sidewall of a pneumatic tire.

11. The method of at least one of the previous claims wherein the rubber article (200, 300) is an apex of a pneumatic tire.

## Patentansprüche

1. Verfahren zum Formen eines Kautschukartikels, wie etwa eines Kautschuklaminats (200,300), wobei der Artikel zwei oder mehr Schichten (220, 230) aus Kautschuk umfasst, wobei das Verfahren die Schritte umfasst des:
Extrudierens einer ersten Kautschukmischung (A) durch einen ersten Extruder (20) und eine erste Zahnradpumpe (25);
Extrudierens einer zweiten Kautschukmischung (B) durch einen zweiten Extruder (40) und eine zweite Zahnradpumpe (42) in den ersten Extruder (20);
Einstellens des Verhältnisses der ersten Mischung (A) zu der zweiten Mischung (B) durch Einstellen der Geschwindigkeit der ersten Zahnradpumpe (25) und/oder der Geschwindigkeit der zweiten Zahnradpumpe (42), und Anbringens eines Kautschukstreifens, der unter Verwendung der ersten Mischung (A) und der zweiten Mischung (B) geformt ist, direkt auf einer Reifenaufbaumaschine oder einer Reifenbautrommel, um eine erste Schicht (220) aus Kautschuk mit einem ersten Mischungsverhältnis zu bilden; und
Einstellens des Verhältnisses der ersten Mischung (A) zu der zweiten Mischung (B) durch Einstellen der Geschwindigkeit der ersten Zahnradpumpe (25) und/oder der zweiten Zahnradpumpe (42) und Anbringens eines Kautschukstreifens, der unter Verwendung der ersten Mischung (A) und der zweiten Mischung (B) geformt ist, als zweite Schicht (230) aus Kautschuk mit einem zweiten Mischungsverhältnis, wobei das erste Mischungsverhältnis und das zweite Mischungsverhältnis verschieden sind.

2. Verfahren nach Anspruch 1, wobei die zweite Schicht (230) oben auf oder über der ersten Schicht (220) angebracht wird.

3. Verfahren nach Anspruch 1 oder 2, weiter umfassend:
Einstellen des Verhältnisses der ersten Mischung (A) zu der zweiten Mischung (B) durch Einstellen der Geschwindigkeit der ersten Zahnradpumpe (25) und/oder der zweiten Zahnradpumpe (42) und Anbringen eines Kautschukstreifens, der unter Verwendung der ersten Mischung (A) und der zweiten Mischung (B) geformt ist, als dritte Schicht (210) aus Kautschuk mit einem dritten Mischungsverhältnis, wobei das dritte Mischungsverhältnis von dem ersten Mischungsverhältnis oder dem zweiten Mischungsverhältnis verschieden ist oder von dem ersten und dem zweiten Mischungsverhältnis verschieden ist.

4. Verfahren nach Anspruch 3, wobei die dritte Schicht (210) oben auf oder über der zweiten Schicht (230) angebracht wird.

5. Verfahren nach mindestens einem der vorhergehenden Ansprüche, wobei der Streifen aus Kautschuk ein kontinuierlicher Streifen aus Kautschuk ist.

6. Verfahren nach mindestens einem der vorhergehenden Ansprüche, wobei der Streifen oder kontinuierliche Streifen aus Kautschuk unter Anwendung der ersten Zahnradpumpe (25) in Kombination mit einer Düse (92) an der Reifenbaumaschine oder der Reifenbautrommel angebracht wird.

7. Verfahren nach mindestens einem der vorhergehenden Ansprüche, wobei die erste Mischung (A) eine niedrige Rollwiderstandseigenschaft insbesondere im Vergleich zu der zweiten Mischung (B) aufweist.

8. Verfahren nach mindestens einem der vorhergehenden Ansprüche, wobei die zweite Mischung (B) eine hohe Abriebfestigkeitseigenschaft insbesondere im Vergleich zu der ersten Mischung (A) aufweist.

9. Verfahren nach mindestens einem der vorhergehenden Ansprüche, wobei der Kautschukartikel (200, 300) eine Lauffläche für einen Luftreifen ist.

10. Verfahren nach mindestens einem der vorhergehenden Ansprüche, wobei der Kautschukartikel (200, 300) eine Seitenwand eines Luftreifens ist.

11. Verfahren nach mindestens einem der vorhergehenden Ansprüche, wobei der Kautschukartikel (200, 300) ein Kernprofil eines Luftreifens ist.

## Revendications

1. Procédé de formation d'un article de caoutchouc tel qu'un stratifié en caoutchouc (200, 300), l'article comprenant deux couches de caoutchouc ou plus (220, 230), le procédé comprenant les étapes dans lesquelles :
on extrude un premier composé de caoutchouc (A) à travers une première extrudeuse (20) et une première pompe à engrenages (25) ;
on extrude un deuxième composé de caoutchouc (B) à travers une deuxième extrudeuse (40) et une deuxième pompe à engrenages (42) jusque dans la première extrudeuse (20) ;
on règle le rapport du premier composé (A) au deuxième composé (B) en réglant la vitesse de la première pompe à engrenages (25) et/ou la vitesse de la deuxième pompe à engrenages (42) ; et on applique une bande de caoutchouc que l'on obtient en utilisant le premier composé (A) et le deuxième composé (B) directement sur une machine de confection d'un bandage pneumatique ou sur un tambour de confection d'un bandage pneumatique pour obtenir une première couche de caoutchouc (220) possédant un premier rapport de mélange ; et
on règle le rapport du premier composé (A) au deuxième composé (B) en réglant la vitesse de la première pompe à engrenages (25) et/ou la vitesse de la deuxième pompe à engrenages (42) ; et on applique une bande de caoutchouc que l'on obtient en utilisant le premier composé (A) et le deuxième composé (B) à titre de deuxième couche de caoutchouc (230) possédant un deuxième rapport de mélange, le premier rapport de mélange et le deuxième rapport de mélange étant différents

2. Procédé selon la revendication 1, dans lequel la deuxième couche (230) est appliquée sur ou par-dessus la première couche (220).

3. Procédé selon la revendication 1 ou 2, comprenant en outre le fait de régler le rapport du premier composé (A) au deuxième composé (B) en réglant la vitesse de la première pompe à engrenages (25) et/ou la vitesse de la deuxième pompe à engrenages (42) et le fait d'appliquer une bande de caoutchouc que l'on obtient en utilisant le premier composé (A) et le deuxième composé (B) à titre de troisième couche de caoutchouc (210) possédant un troisième rapport de mélange, le troisième rapport de mélange étant différent du premier rapport de mélange ou du deuxième rapport de mélange ou étant différent du premier et du deuxième rapport de mélange.

4. Procédé selon la revendication 3, dans lequel la troisième couche (210) est appliquée sur ou par-dessus la deuxième couche (230).

5. Procédé selon au moins une des revendications précédentes, dans lequel la bande de caoutchouc est une bande de caoutchouc continue.

6. Procédé selon au moins une des revendications précédentes, dans lequel la bande ou la bande de caoutchouc continue est appliquée sur la machine de confection d'un bandage pneumatique ou sur le tambour de confection du bandage pneumatique en utilisant la première pompe à engrenages (25) en combinaison avec une buse (92).

7. Procédé selon au moins une des revendications précédentes, dans lequel le premier composé (A) possède une propriété de faible résistance au roulement, lorsqu'on compare en particulier à celle du deuxième composé (B).

8. Procédé selon au moins une des revendications précédentes, dans lequel le deuxième composé (B) possède une propriété de résistance élevée à l'usure, lorsqu'on compare en particulier à celle du premier composé (A).

9. Procédé selon au moins une des revendications précédentes, dans lequel l'article de caoutchouc (200, 300) est une bande de roulement pour un bandage pneumatique.

10. Procédé selon au moins une des revendications précédentes, dans lequel l'article de caoutchouc (200, 300) est un flanc d'un bandage pneumatique.

11. Procédé selon au moins une des revendications précédentes, dans lequel l'article de caoutchouc (200, 300) est un bourrage sur tringle d'un bandage pneumatique.
